Europäisches Patentamt

European Patent Office

Office européen des brevets

(11) Veröffentlichungsnummer: **0 294 775 B1**

(12) **EUROPÄISCHE PATENTSCHRIFT**

(45) Veröffentlichungstag der Patentschrift: **02.09.92**

(21) Anmeldenummer: **88109095.5**

(22) Anmeldetag: **08.06.88**

(51) Int. Cl.⁵: **B01J 37/02**, B01J 35/08, B01J 23/88

Die Akte enthält technische Angaben, die nach
dem Eingang der Anmeldung eingereicht wurden
und die nicht in dieser Patentschrift enthalten sind.

(54) **Verfahren zur Herstellung von Schalenkatalysatoren.**

(30) Priorität: **12.06.87 DE 3719635**

(43) Veröffentlichungstag der Anmeldung:
**14.12.88 Patentblatt 88/50**

(45) Bekanntmachung des Hinweises auf die
Patenterteilung:
**02.09.92 Patentblatt 92/36**

(84) Benannte Vertragsstaaten:
**BE DE FR GB IT NL**

(56) Entgegenhaltungen:
**EP-A- 0 015 569        DE-A- 2 608 823
DE-A- 2 626 887        DE-B- 1 442 590
DE-C- 899 648          US-A- 4 255 253**

(73) Patentinhaber: **BASF Aktiengesellschaft
Carl-Bosch-Strasse 38
W-6700 Ludwigshafen(DE)**

(72) Erfinder: **Riekert, Lothar, Prof. Dr.
Im Eichbaeumle 21
W-7500 Karlsruhe 1(DE)**
Erfinder: **Kotter, Michael
Frühmessweinberg 22
W-7520 Bruchsal 4(DE)**
Erfinder: **Becker, Dieter
Rintheimer Hauptstrasse 152
W-7500 Karlsruhe 1(DE)**

## Beschreibung

Bei zahlreichen technisch wichtigen katalytischen Reaktionen besteht die Aufgabe darin, aus einem Ausgangsstoff ein Wertprodukt in möglichst hoher Ausbeute zu erzeugen, obwohl dieses Wertprodukt am gleichen Katalysator zu stabileren, jedoch unerwünschten Stoffen weiterreagieren kann. Es läßt sich nun zeigen, daß bei der Verwendung von porösen Katalysatoren die erreichbare Ausbeute am Wertprodukt durch den notwendigerweise mit der chemischen Reaktion im Porengefüge gekoppelten Stofftransport negativ beeinflußt wird. Dieser Einfluß laßt sich vermindern, indem die für den Stofftransport charakteristische Länge und damit die Relaxationszeit für den Stoffaustausch verkleinert wird; dies kann z.B. durch Verkleinerung des Durchmessers der Katalysatorkörner geschehen.

Bei Festbettreaktoren sind einer Verkleinerung des Korndurchmessers $d_K$ und des damit verbundenen Anstiegs des Druckverlustes $\Delta p \approx d_K^{-3}$ Grenzen gesetzt. Einen Ausweg bieten hier sogenannte Schalenkatalysatoren, bei denen die katalytisch wirksame Substanz in einer dünnen Schicht auf einen unporösen Träger aufgebracht wird. Die Aufbringung der Schale kann z. B. durch Aufpelletieren der aktiven Substanz geschehen. Dabei wird häufig weder eine ausreichende Haftung zwischen Schale und Träger noch eine ausreichende Abriebfestigkeit der Schale erreicht.

Aus EP 15 569 ist ein Verfahren zur Herstellung von vanadin- und wolframhaltigen Schalenkatalysatoren bekannt, bei dem nach Aufsprühen von wäßrigen Suspensionen der katalytisch aktiven Komponenten bei Temperaturen unter 70° C, Trocknung und Kalzinierung der Katalysatoren in Dragiertrommeln oder Dragierkesseln vorgenommen wird.

Es wurde ein Verfahren zur Herstellung von Schalenkatalysatoren, die Molybdän, Eisen und Wismuth und gegebenenfalls auch ein Element aus der Gruppe Kobalt, Nickel, Zink und Magnesium und ein Element aus der Gruppe Phosphor, Bor und Arsen enthalten, durch Aufsprühen von Suspensionen und/oder Lösungen des katalytisch aktiven Materials auf bewegte Trägerteilchen bei Temperaturen von 100 bis 600° C, gefunden, welches dadurch gekennzeichnet ist, daß man Lösungen oder Suspensionen der für den Aufbau der aktiven Komponenten benötigten Stoffe auf die in einem drehbaren Behälter bewegten Teilchen bei 100 bis 200° C aufsprüht, die beim nachfolgenden Trocknen und Kalzinieren im Behälter Zonen mit Temperaturen von 200 bis 600° C durchwandern, wobei nacheinander die Vorgänge Befeuchtung, Trocknen und Kalzinieren unter Bildung der Aktivkomponenten stattfinden,

Vorteilhaft wird als drehbarer Behälter ein beheizter Pelletierteller, dessen Drehachse auch Neigungswinkel von 30 bis 60° C aufweist, verwendet.

Der wesentliche Erfindungsgedanke besteht darin, daß es möglich sein sollte, die für den Aufbau der Aktivkomponente benötigten Stoffe in einer Lösung oder Suspension, u.U. zusammen mit Bindemittel und Porenbildnern, in einer dünnen Schicht auf den Träger aufzusprüchen, danach das Lösungsmittel zu entfernen und die Aktivkomponente bzw. den Vorläufer durch Kalzinieren (thermische Behandlung) zu bilden. Die Schicht muß deswegen dünn sein, damit die während des Verfahrensablauf auftretenden Effekte wie Schrumpfung und Gasentwicklung nicht zu Spannungen und womöglich Rißbildungen in der Schale führen. Durch mehrfache Wiederholung des beschriebenen Verfahrensablaufs sollten sich im Prinzip dann beliebige Schichtdicken erzielen lassen.

Verfahrenstechnisch kann dieser zunächst aufwendig erscheinende Prozeß recht einfach verwirklicht werden. Läßt man nämlich eine größere Menge von Träger in einem beheizten Pelletierteller umlaufen und sprüht die Lösung oder Suspension nur in einem begrenzten Bereich auf, so durchlaufen die Einzelpartikel zwangsläufig die einzelnen Verfahrensstufen Sprühimprägnierung - Trocknung - Kalzinierung. Für die Gesamtheit der Katalysatorkörper hingegen verlaufen die Teilschritte simultan unter zeitlich konstanten Betriebsbedingungen.

Wichtig für die erfolgreiche Durchführung des erfindungsgemäßen Verfahrens ist es, die maßgeblichen Zeitkonstanten für die Imprägnierung, die Trocknung und die Kalzinierung richtig aufeinander abzustimmen.

Die aufeinander abzustimmenden unabhängigen Regelgrößen sind:

a) die Drehzahl und der Neigungswinkel des Tellers, die bei stationärem Betrieb auch den Füllungsgrad des Tellers bestimmen,

b) der Flüssigkeitsmengenstrom (im stationären Fall zusätzlich der Feststoffmengenstrom),

c) der Volumenstrom und die Zustandsbedingungen der Trocknungsluft sowie der Ort und die Ausdehnung des angeströmten Bereichs,

d) der Ort und die Ausdehnung des besprühten Bereichs,

e) die Tropfengröße und Form des Sprühkegels.

Als Lösungen sind 1 bis 5 %ige wäßrige Lösungen der leichtzersetzbaren Salze von Bi, Fe, Zn, Ni, z.B. die Nitrate, geeignet, die weiterhin bis zu 5 % Ammoniummolybdat enthält und weiterhin gegebenenfalls bis zu 1 % einer Alkaliverbindung, z.B. $KNO_3$ und 1,5 $SiO_2$ in kolloidaler Form.

Als Trägermaterial kann z.B. Magnesiumsilikat verwendet werden, und zwar in Form von Kugeln und Strängen, insbesondere aber auch in Form von komplizierten Formkörpern, wie z.B. Hohlsträngen und Sätteln.

Bei dem erfindungsgemäßen Verfahren läßt sich ähnlich wie bei der Aufbaugranulation oder beim Strangpressen das Porenvolumen durch das Subtraktionsverfahren erhöhen; das Verfahren gestattet es auch, Ringe und dergleichen auf der Innenseite zu beschichten.

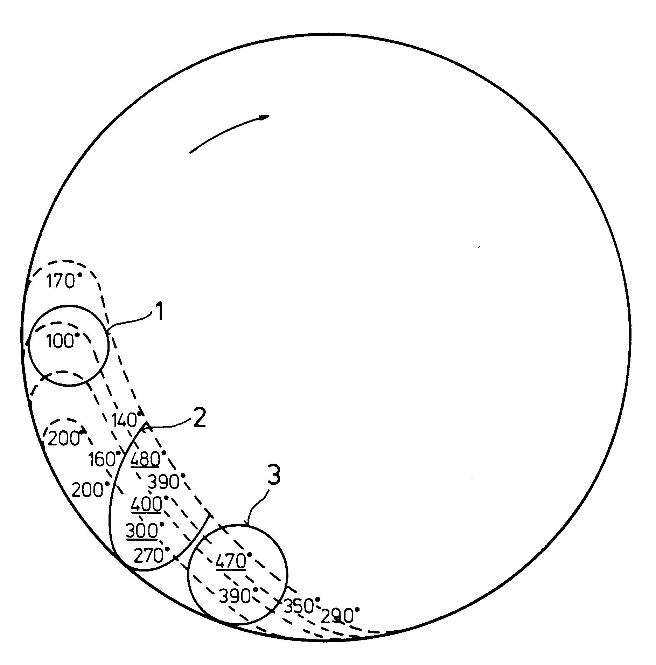

Die nachfolgend beschriebenen Versuche wurden chargenweise in der in Abb. 1 skizzierten Apparatur durchgeführt. Dabei lassen sich bei einer monodispersen Kornverteilung durch den sogenannten Klassiereffekt gleichmäßig dicke Schalen erreichen; Kugeln mit dickerer Schale halten sich bevorzugt im unteren Teil des Tellers auf und sind so zeitweise vom Beschichtungsprozeß ausgenommen. In Abb. 1 ist schematich die Fläche eines bewegten Tellers mit den Temperatur- und Behandlungszonen wiedergegeben; Sprühzone 1, Trocken- und Kalzinierungszonen 2 und 3.

Beispiel

In einem Pelletierteller rotierende, unporöse, aufgerauhte Steatitkugeln werden mit einer Lösung besprüht, die neben den für den Aufbau der Aktivkomponente notwendigen Stoffen als Bindemittel $SiO_2$ enthält. Durch Anblasen mit heißer Luft stellt sich im Teller die in Abb. 1 skizzierten Partikeltemperaturen ein, die ausreicht, zum einen die Trocknung, zum anderen die Zersetzung der in der Lösung enthaltenen Nitrate zu bewerkstelligen.

Zusammensetzung der Lösung:

52,97 g Ammoniumheptamolybdat
14,88 g $Zn(NO_3)_2 \cdot 6\ H_2O$
20,2 g $Fe(NO_3)_3 \cdot 9\ H_2O$
43,62 g $Ni(NO_3)_2 \cdot 6\ H_2O$
12,13 g $Bi(NO_3)_3 \cdot 5\ H_2O$
0,076 g $KNO_3$
37,6 g $SiO_2$ - Sol (40 % $SiO_2$)
in 1 l 2n Salpetersäure

Betriebsbedingungen:

Trägermasse:
100 g Steatitkugeln mit ca. 3 mm Durchmesser
Flüssigkeitsstrom:
20 ml/min
Trocknungsluft:
1200 l/min bei 600°C
Tellerdurchmesser:
300 mm
Drehzahl:
20 Upm

Ergebnisse:

Schalenwachstum
5 μm/min
Abrieb nach 30 min in Rüttelsieb mit 225 μm Maschenweite: <0,5 %.

**Patentansprüche**

1.  Verfahren zur Herstellung von Schalenkatalysatoren, die Molybdän, Eisen und Wismuth und gegebenenfalls auch ein Element aus der Gruppe Kobalt, Nickel, Zink und Magnesium und ein Element aus der Gruppe Phosphor, Bor und Arsen enthalten, durch Aufsprühen von Suspensionen und/oder Lösungen des katalytisch aktiven Materials auf bewegte Trägerteilchen bei Temperaturen von 100 bis 600°C, dadurch **gekennzeichnet,** daß man Lösungen oder Suspensionen der für den Aufbau der aktiven Komponenten benötigten Stoffe auf die in einem drehbaren Behälter bewegten Teilchen bei 100 bis 200°C aufsprüht, die beim nachfolgenden Trocknen und Kalzinieren im Behälter Zonen mit Temperaturen von 200 bis 600°C durchwandern, wobei nacheinander die Vorgänge Befeuchtung, Trocknen und Kalzinieren unter Bildung der Aktivkomponenten stattfinden.

2.  Verfahren nach Anspruch 1, dadurch gekennzeichnet, daß man als drehbaren Behälter einen Pelletierteller, dessen Orehachse auch Neigungswinkel von 30 bis 60°C aufweist, verwendet.

**Claims**

1.  A process for the preparation of a coated catalyst which contains molybdenum, iron and bismuth and may furthermore contain an element selected from the group consisting of cobalt, nickel, zinc and magnesium and an element selected from the group consisting of phosphorus, boron and arsenic, by spraying a suspension or a solution of the catalytically active material onto agitated carrier particles at from 100 to 600°C, wherein a solution or suspension of the substances required for producing the active components is sprayed, at from 100 to 200°C, onto the particles which are in motion in a rotatable container and which pass through zones at from 200 to 600°C during subsequent drying and calcination in the container, the processes of moistening, drying and calcination with formation of the active components taking place in succession.

2.  A process as claimed in claim 1, wherein a pelletizing disk whose axis of rotation also has an angle of inclination of from 30 to 60° is used as the rotatable container.

## Revendications

1.  Procédé de préparation de catalyseurs à couche superficielle qui contiennent du molybdène, du fer, du bismuth et éventuellement un élément du groupe comprenant le cobalt, le nickel, le zinc et le magnésium et un élément du groupe comprenant le phosphore, le bore et l'arsenic, par pulvérisation de suspensions et/ou de solutions de la matière catalytiquement active sur des particules de support en mouvement, à des températures de 100 à 600°C, caractérisé en ce qu'on pulvérise des solutions ou suspensions des substances nécessaires pour la constitution des composants actifs sur les particules en mouvement dans un récipient rotatif à une température de 100 à 200°C, lesquelles particules parcourent, lors du séchage et de la calcination subséquentes dans le récipient, des zones à des températures de 200 a 600°C, les processus d'humidification, de séchage et de calcination ayant lieu successivement avec formation des composants actifs.

2.  Procédé selon la revendication 1, caractérisé en ce qu'on utilise, comme récipient rotatif, un plateau de granulation dont l'axe de rotation présente un angle d'inclinaison de 30 à 60°.